# EUROPEAN PATENT APPLICATION

(11) **EP 2 416 184 A1**
(43) Date of publication of application: **08.02.2012**
(21) Application number: 10758475.7
(22) Date of filing: 23.03.2010
(51) Int. Cl.: G02B 1/11, G02B 1/00

(54) **OPTICAL MEMBER AND PROCESS FOR PRODUCING SAME**

(30) Priority: 31.03.2009 JP 2009086472
(71) Applicant: Stella Chemifa Corporation, Osaka 541-0047 (JP)
(72) Inventor: HASHIGUCHI,Shinji, Izumiotsu-shi Osaka 595-0075 (JP); HIRANO,Kazutaka, Izumiotsu-shi Osaka 595-0075 (JP); MORI,Akira, Izumiotsu-shi Osaka 595-0075 (JP)
(74) Representative: Sajda, Wolf E.
(86) International application number: PCT/JP2010/054979
(87) International publication number: WO 2010/113701

(57) **Abstract**

An optical member produced from a ceramic in which transparency in each wavelength region can be selectively improved, and a process for producing the optical member. The optical member is obtained by bringing a treatment gas comprising a fluorine atom into contact with an optical material comprising a specific ceramic under conditions according to the specific ceramic to thereby from a fluorinated film capable of improving the transmittance of light having wavelengths in a specific region, on at least some of the surface of the optical material.

## Description

### TECHNICAL FIELD

The invention relates to an optical member that is produced by subjecting a ceramic to a fluorination treatment so that its transmittance in each wavelength region can be increased depending on different uses, and to a method for manufacture thereof.

### BACKGROUND ART

Ceramics are used in a wide variety of industrial members in the field of semiconductor-related instruments such as next-generation exposure apparatuses and in the field of optics-related instruments such as microscopes and cameras. In these fields, for example, there is a need for optical device materials capable of being used in the ultraviolet/vacuum ultraviolet region. Properties required of such optical device materials include high transparency and selectivity of refractive index variations.
Examples of such optical device materials include single crystals of fluoride-based materials and metal oxide-based materials. Unfortunately, relatively few single crystals of such fluoride-based materials are readily producible, although single crystals of such fluoride-based materials have high transparency. In addition, single crystals of fluoride-based materials generally have low refractive index and therefore are difficult to be used in wide applications of optical device materials.

On the other hand, single crystals of the metal oxide-based materials are relatively easy to produce, and the resulting single crystals have high refractive index. In the ultraviolet/vacuum ultraviolet region, however, few metal oxide-based materials have suitable transparency for optical device material applications. Therefore, single crystals of metal oxide-based materials have been required to have further improved transparency in each wavelength region.

### PRIOR ART DOCUMENT

### Patent Document

- Patent Document 1:: Japanese Patent Application Laid-Open (JP-A) No. 2007-94376

### SUMMARY OF THE INVENTION

### Problems to be solved by the invention

The invention has been made in view of the problems described above, and an object of the invention is to provide a ceramic optical member capable of having selectively increased transparency in each wavelength region and to provide a method for manufacture thereof.

### MEANS FOR SOLVING THE PROBLEMS

To solve the conventional problems, the inventors have made studies on optical members and methods for manufacture thereof. As a result, the invention has been accomplished based on the finding that the object can be achieved using the features described below.

To solve the above problems, therefore, the invention is directed to an optical member, comprising: an optical material comprising a specific ceramic; and a fluoride film that is formed on at least a partial region of the surface of the optical material by bringing a treatment gas containing at least a fluorine atom into contact with the optical material under conditions depending on the specific ceramic, wherein the fluoride film is capable of increasing light transmittance in a specific wavelength region.

According to the above feature, a treatment gas containing at least a fluorine atom is brought into contact with an optical material comprising a specific ceramic under conditions (such as treatment temperature and treatment time) depending on the ceramic, so that a fluoride film is successfully formed on the contact region. In a specific wavelength region, the fluoride film can provide a higher light transmittance than the ceramic without it. The fluoride film can also suppress corrosion of the optical material surface and thermal damage-induced degradation of transmittance. As a result, the optical member can be successfully used in semiconductor-related instruments such as exposure apparatuses or optics-related instruments such as microscopes and cameras.

In the above structure, the ceramic is preferably an oxide ceramic comprising a metal oxide.

Also in the above structure, the ceramic is preferably a non-oxide ceramic comprising a metal nitride or a metal carbide.

In addition, the oxide ceramic is preferably at least one selected from the group consisting af MgO, Al₂O₃, TiO₂, BeO, ZrO₂, ZnO, Dy₂O₃, Ho₂O₃, Lu₂O₃, Sc₂O₃, Tm₂O₃, Yb₂O₃, Y₂O₃, SrTiO₃, AlLaO₃, Y₃Al₅O₁₂, MgO·Al₂O₃, YVO₄, BaTiO₃, Nd-doped Y₃Al₅O₁₂, Ce-doped LuYSiO₅, Bi₄Ge₃O₁₂, Ce-doped Lu₂SiO₅, and Ce-doped Gd₂SiO₅.

Also in the above structure, the optical material preferably has been brought into contact with the treatment gas at a treatment temperature in the range of 160°C to 700 °C for a treatment time period in the range of 1 minute to 5 hours. When the conditions are appropriately set within the ranges, the wavelength region in which the transparency should be increased can be selected as desired.

To solve the above problems, the invention is also directed to a method for manufacturing an optical member, comprising: providing an optical material comprising a specific ceramic; and bringing a treatment gas containing at least a fluorine atom into contact with the optical material under conditions depending on the specific ceramic so that a fluoride film capable of increasing light transmittance in a specific wavelength region is formed on at least a partial region of the surface of the optical material.

According to the method, a treatment gas containing at least a fluorine atom is brought into contact with an optical material comprising a specific ceramic (fluorination treatment) so that a fluoride film can be formed as a coating on the contact region. In addition, the treatment gas is brought into contact under conditions (such as treatment temperature and treatment time) depending on the specific ceramic, so that an optical member is successfully produced, which can provide a higher light transmittance in a specific wavelength region than the non-fluorinated ceramic and can also suppress surface corrosion and thermal damage-induced degradation of transmittance.

In the method, an oxide ceramic comprising a metal oxide is preferably used as the ceramic.

In the method, a non-oxide ceramic comprising a metal nitride or a metal carbide is preferably used as the ceramic.

In the method, the oxide ceramic used is preferably at least one selected from the group consisting of MgO, Al₂O₃, TiO₂, BeO, ZrO₂, ZnO, Dy₂O₃, Ho₂O₃, Lu₂O₃, Sc₂O₃, Tm₂O₃, Yb₂O₃, Y₂O₃, SrTiO₃, AlLaO₃, Y₃Al₅O₁₂, MgO·Al₂O₃, YVO₄, BaTiO₃, Nd-doped Y₃Al₅O₁₂, Ce-doped LuYSiO₅, Bi₄Ge₃O₁₂, Ce-doped Lu₂SiO₅, and Ce-doped Gd₂SiO₅.

In the method, the optical material is preferably brought into contact with the treatment gas at a treatment temperature in the range of 160°C to 700 °C for a treatment time period in the range of 1 minute to 5 hours. When the conditions are appropriately set within the ranges, the wavelength region in which the transparency should be increased can be selected as desired.

### EFFECTS OF THE INVENTION

The invention produces advantageous effects as described below by the means described above.
Specifically, the optical member of the invention has a structure comprising a ceramic optical material and a fluoride film that is formed as a coating on at least a partial region of the surface of the optical material. This can provide a higher light transmittance in a specific wavelength region than the ceramic with no fluoride film.
This can also suppress corrosion of the optical material surface and thermal damage-induced degradation of transmittance. As a result, the optical member can be successfully used in semiconductor-related instruments such as exposure apparatuses or optics-related instruments such as microscopes and cameras.

According to the optical member-manufacturing method of the invention, a treatment gas containing at least a fluorine atom is brought into contact with a ceramic optical material, so that a fluoride film is successfully formed as a coating on the surface of the optical material. This allows simple production of an optical member that can provide a higher light transmittance in a specific wavelength region than the ceramic with no fluoride film formed thereon and can also suppress surface corrosion and thermal damage-induced degradation of transmittance.

### BRIEF DESCRIPTION OF THE DRAWINGS

- Fig. 1: is a schematic diagram illustrating an example of a reactor for use in the production of an optical member according to an embodiment of the invention;
- Fig. 2: is a graph showing the distribution of the light transmittance of an optical member made of single crystal Al2O3 in each wavelength region;
- Fig. 3: is a graph showing the distribution of the light transmittance of an optical member made of single crystal MgO in each wavelength region;
- Fig. 4: is a graph showing the distribution of the light transmittance of an optical member made of single crystal SrTiO3 in each wavelength region;
- Fig. 5: is a graph showing the distribution of the light transmittance of an optical member made of single crystal Y3Al5O12 in each wavelength region;
- Fig. 6: is a graph showing the distribution of the light transmittance of an optical member made of single crystal MgO·Al2O3 in each wavelength region;
- Fig. 7: is a graph showing the distribution of the light transmittance of an optical member made of single crystal TiO2 in each wavelength region;
- Fig. 8: is a graph showing the distribution of the light transmittance of an optical member made of single crystal AlLaO3 in each wavelength region;
- Fig. 9: is a graph showing the distribution of the light transmittance of an optical member made of polycrystalline Y3Al5O12 in each wavelength region;
- Fig. 10: is a graph showing the distribution of the light transmittance of an optical member made of polycrystalline 1 % Nd-YAG in each wavelength region;
- Fig. 11: is a graph showing the distribution of the light transmittance of an optical member made of polycrystalline Al2O3 in each wavelength region;
- Fig. 12: is a graph showing the distribution of the light transmittance of an optical member made of single crystal Ce:LYSO in each wavelength region;
- Fig. 13: is a graph showing the distribution of the light transmittance of an optical member made of single crystal BGO in each wavelength region;
- Fig. 14: is a graph showing the distribution of the light transmittance of an optical member made of single crystal Ce:LSO in each wavelength region; and
- Fig. 15: is a graph showing the distribution of the light transmittance of an optical member made of single crystal Ce:GSO in each wavelength region.

### EMBODIMENTS FOR CARRYING OUT THE INVENTION

An optical member according to an embodiment of the invention is described below.
An optical member according to an embodiment of the invention has a structure comprising a ceramic optical material and a fluoride film provided on at least a partial region of the surface of the ceramic optical material. The ceramic may be an oxide ceramic or a non-oxide ceramic. In an embodiment of the invention, the ceramic may have a crystal structure (comprising any of a single crystal structure and a polycrystal structure) or an amorphous structure. The term "single crystal" means a crystalline solid in which the orientations of any crystal axes are substantially the same at every part. The term "polycrystal" means a solid comprising an aggregate of single crystals with different orientations.

The oxide ceramic may be a metal oxide composed of one or more metal elements and oxygen. The metal oxide may be a simple metal oxide which is a compound composed of a single metal element and oxygen or may be a complex metal oxide which is a compound composed of two or more metal elements and oxygen. For example, the simple metal oxide may be at least one selected from the group consisting of MgO, Al₂O₃, TiO₂, BeO, ZrO₂, ZnO, Dy₂O₃, Ho₂O₃, Lu₂O₃, Sc₂O₃, Tm₂O₃, Yb₂O₃, and Y₂O₃.
For example, the complex metal oxide may be at least one selected from the group consisting of SrTiO₃, AlLaO₃, Y₃Al₅O₁₂, MgO·Al₂O₃, YVO₄, and BaTiO₃. In an embodiment of the invention, the metal oxide may also be a mixture of such a simple metal oxide and such a complex metal oxide. The metal oxide may also be doped with Nb, Ce, Cr, Sm, Yb, Tm, Pr, Eu, Ho, Er, Gd, or any other dopant. Even when the optical material is doped with such a dopant, the fluorination treatment makes it possible to provide an optical member with improved transmittance for a laser or any other use.

The non-oxide ceramic may be a metal nitride composed of one or more metal elements and nitrogen. Examples of the metal nitride include, but are not limited to, TiN, ZrN, SiN, Si₃N₄, AlN, TaN, and BN. The non-oxide ceramic may also be a metal carbide composed of one or more metal elements and carbon. Examples of the metal carbide include, but are not limited to, WC, SiC, TiC, ZrC, B₄C, TaC, and NbC,

The ceramic optical material for use in an embodiment of the invention is preferably such that an element contained in the material can form a fluoride having a boiling point higher than the temperature of the fluorination treatment described below. In this case, excessive heating can be prevented, and the destruction of the produced fluoride film can be prevented. Also preferably, an element contained in the material can form a fluoride having low hygroscopic properties. In this case, the transmittance can be further increased.

The fluoride film is a coating layer formed by the fluorination treatment described below. The fluoride film is also a layer comprising a fluoride of a metal that forms the ceramic. When a layer containing diffused fluorine is formed under the above layer, such a diffused fluorine-containing layer is also substantially included in the fluoride film.

The region on which the fluoride film is formed is preferably the entire surface of the optical material. It will be understood that in the invention, such a feature is non-limiting, and in an embodiment, the fluoride film may be provided on at least a partial region of the surface of the optical material. In this case, partial formation of the fluoride film can be achieved by masking a predetermined region of the optical material in the process of fluorination treatment described below.
The masking material used in the masking is not restricted, as long as it has heat resistance to a temperature equal to or higher than the process temperature. For example, the masking material may be made of fluororesin such as polytetrafluoroethylene, polytetrafluorochloroethylene, polyvinyl fluoride, polyvinylidene fluoride, polydichlorodifluoroethylene, or polytrifluorochloroethylene, ceramics, polyimide, or polyether ether ketone (PEEK).

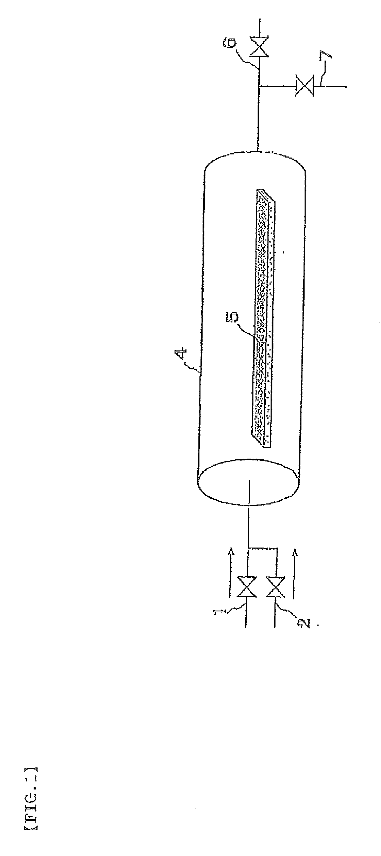

For example, the optical member may be manufactured using a reactor as shown in Fig. 1. First, an optical material 5 is placed in a reaction vessel 4 of the reactor shown in Fig. 1. The reaction vessel 4 to be used may be typically, but not limited to, one made of stainless steel, aluminum, nickel, or an alloy such as Monel.

The optical material 5 is then subjected to a pretreatment process. The pretreatment process is preferably a method of heating the optical material 5 under an inert gas atmosphere. In the pretreatment process, fluorination-inhibiting components such as water and volatile components are successfully removed in advance from the optical material. This makes it possible to manufacture an optical member with a further increased transmittance. The pretreatment process may be optionally performed as needed.

For example, the pretreatment process is performed under a flow of the inert gas, which is introduced into the reaction vessel 4 from an inert gas supply line 1 (see Fig. 1). The inert gas may be of any type other than a gas that can react with the optical material to have an adverse effect on it or a gas that contains an impurity having such an adverse effect. Specifically, for example, dry air, nitrogen, argon, helium, neon, krypton, xenon, etc. may be used alone or in any combination. While the purity of the inert gas is not restricted, the impurity having the adverse effect is preferably 100 ppm or less, more preferably 10 ppm or less, in particular, preferably 1 ppm or less.

In the pretreatment process, the temperature in the reaction vessel 4 is typically, but not limited to, in the range of 160 to 700 °C, more preferably in the range of 200 to 550 °C. If it is less than 160°C, there may be the problem that a volatile component such as adsorbed water on the surface of the optical material may remain so that the fluorination treatment can make the optical material surface cloudy. If it is more than 700 °C, there may be the problem that the energy and the heater may be too high and too large. For example, the time period of the pretreatment process is preferably, but not limited to, in the range of 1 hour to 12 hours, more preferably in the range of 1 to 6 hours. If it is less than 1 hour, the volatile component may remain so that the fluorination treatment can make the optical material surface cloudy. If it is more than 12 hours, the problem of high manufacturing costs may occur due to the long manufacturing time. In the pretreatment process, for example, the pressure in the reaction vessel 4 is preferably in the range of 1 kPa to 5 MPa, more preferably in the range of 10 kPa to 0.5 MPa. If it is less than 1 kPa, a large vacuum system will be necessary so that the problem of high costs may occur. If it is more than 5 MPa, there may be the problem that a too large highpressure system should be used.

Subsequently, the optical material 5 after the pretreatment process is subjected to a fluorination treatment process. This process is performed by bringing a fluorine atom-containing treatment gas into contact with the optical material 5. The treatment gas may be at least one selected from the group consisting of hydrogen fluoride (HF), fluorine (F₂), chlorine trifluoride (ClF₃), sulfur tetrafluoride (SF₄), boron trifluoride (BF₃), nitrogen trifluoride (NF₃), and carbonyl fluoride (COF₂). A dilution of any of these gases with an inert gas may also be used.

When a dilution is prepared with an inert gas, the concentration of the fluorine atom-containing gas in the treatment gas is preferably in the range of 0.1 to 100 % by volume, more preferably in the range of 1 to 100 % by volume, in particular, preferably in the range of 10 to 100 % by volume. If it is less than 0.1 % by volume, the optical material may be insufficiently fluorinated so that the transmittance may fail to increase to the desired level.

The inert gas for use in dilution may be of any type other than a gas that can react with the treatment gas to have an adverse effect on the fluorination of the ceramic optical material 5, a gas that can react with the optical material 5 to have an adverse effect on it, or a gas that contains an impurity having such an adverse effect. Specifically, for example, dry air, nitrogen, argon, helium, neon, krypton, xenon, etc. may be used alone or in any combination. While the purity of the inert gas is not restricted, the impurity having the adverse effect is preferably 100 ppm or less, more preferably 10 ppm or less, in particular, preferably 1 ppm or less.

For example, the fluorination treatment is performed as described below. First, the valve of the inert gas supply line 1 shown in Fig. 1 is closed, and then the valve of a vacuum line 7 is opened so that the pressure in the reaction vessel 4 is reduced. For example, the reduced pressure is preferably, but not limited to, 1 to 100 Pa or less, more preferably 1 to 10 Pa or less. If necessary, the inside of the reaction vessel 4 may also be pre-heated or pre-cooled.

After the pressure is reduced to the predetermined level, the valve of the vacuum line 7 is closed, and then the valve of the inert gas supply line 1 and the valve of a fluorinating gas supply line 2 are opened. Thus, an inert gas and a fluorinating gas are mixed together in the line, and the mixture is supplied as a treatment gas to the reaction vessel 4.

The concentration of the fluorine atom-containing gas may be set within the range of 0.1 to 100 % by volume as mentioned above. In the early stage of the reaction, the reaction between the optical material and the fluorinating gas may be allowed to proceed slowly. In such a case, the concentration of the fluorinating gas is preferably in the range of 0.1 to 50 % by volume, more preferably in the range of 0.1 to 30 % by volume, in particular, preferably in the range of 0.1 to 20 % by volume.

The concentration of the fluorine atom-containing gas in the treatment gas can be controlled by the flow rate of the gas supplied from each of the inert gas supply line 1 and the fluorinating gas supply line 2. The fluorine atom-containing gas may be continuously supplied under any of atmospheric pressure, increased pressure, or reduced pressure, or may be enclosed under atmospheric pressure, increased pressure, or reduced pressure.

The time period of the fluorination treatment is typically, but not limited to, in the range of 1 minute to 5 hours, preferably 1 hour to 4 hours. If the treatment time is less than 1 minute, sufficient transparency may fail to be imparted to the optical material 5. If the treatment time is more than 5 hours, the fluorination may fail to proceed proportionally to the long treatment time, which may make the manufacturing time long and reduce the manufacturing efficiency.

The temperature of the inside of the reaction vessel 4 (treatment temperature) in the process of fluorination treatment is preferably determined taking into account the heat resistance temperature of the optical material 5 and the fluoride film to be produced, although it is not restricted. Specifically, for example, it is preferably in the range of 160 °C to 700 °C, more preferably 200°C to 550 °C. If the treatment temperature is less than 160 °C, sufficient transparency may fail to be imparted to the optical material 5. If the treatment temperature is more than 700°C, the optical material 5 may be thermally deformed so that the yield ratio can increase.

The flow rate of the treatment gas flowing in the reaction vessel 4 is not restricted and may be controlled together with the fluorine concentration depending on how the reaction is proceeding. The gas flow rate may also be appropriately adjusted depending on the size of the reaction vessel 4 and the shape of the optical material 5.

The transparency of the optical member to each light wavelength region can be controlled by the treatment conditions in the fluorination treatment process. More specifically, the light transmittance in the region from visible to near infrared (400 nm to 2.5 µm) can be increased by setting the treatment temperature high in the fluorination treatment, increasing the concentration of the fluorine atom-containing gas in the treatment gas, or strengthening the fluorination treatment, such as increasing the treatment time. On the other hand, the light transmittance in the ultraviolet region (0.2 nm to 400 nm) can be increased by setting the treatment temperature low, reducing the concentration of the fluorine atom-containing gas in the treatment gas, or weakening the fluorination treatment, such as reducing the treatment time. The fluorination treatment conditions for the control of the transparency may be appropriately determined depending on the type of the ceramic used to form the optical material.

After the treatment gas is brought into contact with the optical material 5 for a predetermined time period, the valve of the fluorinating gas supply line 2 is closed, and the supply of the inert gas from the inert gas supply line 1 is continued, so that the treatment gas in the reaction vessel 4 is replaced with the inert gas only. In this case, the inert gas mentioned above may be used. Subsequently, after the gas in the reaction vessel 4 is replaced with the inert gas, the valve of the inert gas supply line 1 is closed, the valve of an exhaust line 6 is opened, and the optical material 5 having undergone the fluorination treatment is taken out.

In addition, the optical material after the fluorination treatment may be subjected to a heat treatment using a heater (post-treatment process). The heat treatment allows removal of the fluorine atom-containing gas, which remains on the optical material, or impurities such as hydrogen fluoride, which are produced during the reaction and adsorb on the surface. The heating also allows the fluorination to further proceed inside the optical material and allows a further improvement in mechanical strength.
While the heating temperature may be appropriately determined depending on the physical properties of the optical material and the resulting fluoride film, it is preferably from 160 to 700 °C, more preferably from 200 to 550 °C. The heating time period is preferably from 1 to 360 minutes, more preferably from 10 to 120 minutes. If the heating temperature is less than 160 °C or the heating time period is less than 1 minute, the fluorinating gas or impurities may be insufficiently removed.
If the heating temperature is more than 700 °C, the problem of a reduction in the mechanical strength of the optical member may occur, and if the heating time period is more than 360 minutes, the manufacturing time may be long so that the problem of low manufacturing efficiency may occur. The post-treatment process may be optionally performed as needed.

The optical member taken out of the reaction vessel 4 after the fluorination treatment may be washed with a cleaning liquid such as water or alcohol taking into account the physical properties of the fluoride film. This allows removal of fluorine gas deposited on the optical material and byproducts of the reaction, so that the optical material can be stably obtained.

For example, the optical member obtained by the manufacturing method described above is suitable for use in lamps having an optical system, in which it can be used to form a prism, a reflector, or the like, photometric instruments such as spectrophotometers, fluorophotometers, interferometers, or refractameters, optical instruments having a vacuum ultraviolet standard light source, an excitation source for photochemical reaction, a plate-making or photographic light source, or any of various experimental light sources, scintillators, LED substrates, optical isolator applications, laser oscillation/ modulation applications, holograms, lamp sealants, optical IC/device applications, crystals for X-rays, phase-conjugating crystals, exposure instruments, lenses, vacuum ultraviolet region lenses, displays, fiber crystals, optical switches or shutters, wavelength selecting devices, semiconductor process systems, photomask inspection instruments, high-power/short-pulse laser applications, optical filters, electro-optical applications, etc.

### EXAMPLES

Hereinafter, preferred examples of the invention are illustratively described in detail. It will be understood that the materials, the amounts, and so on described in the examples are not intended to limit the scope of the invention, unless otherwise specified.

### Example 1

In this example, an optical member was prepared using the reactor shown in Fig. 1. First, an optical material made of single crystal Al₂O₃ (a product obtained by mirror-polishing a product manufactured by Sigma-Aldrich Corporation) is introduced into the reaction vessel 4. Subsequently, the valve of the vacuum line 7 was opened, and the pressure in the reaction vessel 4 was reduced to 1 Pa or less.

The valve of the vacuum line 7 was closed, the valve of the inert gas supply line 1 was opened, and nitrogen gas was introduced into the reaction vessel 4, When the indicated pressure in the reaction vessel 4 reached the atmospheric pressure, the valve of the exhaust line 6 was opened, and a heat treatment was performed at 400 °C and a nitrogen flow rate of 50 mL/minute for 2 hours. The rate of temperature rise was set at 6.5 °C /minute (pretreatment process).

After a predetermined time period, the inside of the reaction vessel 4 was cooled to room temperature, and the valves of the inert gas supply line 1 and the exhaust line 6 were closed so that the reaction vessel 4 was hermetically closed. Subsequently, the valve of the vacuum line 7 was opened, and the pressure in the reaction vessel 4 was reduced to 1 Pa or less.

Subsequently, the valve of the vacuum line 7 was closed, the valve of the fluorinating gas supply fluorine-line 2 was opened, and fluorine gas containing 100 % by volume of F₂ was introduced at a flow rate of 20 mL/minute until the pressure in the reaction vessel 4 reached the atmospheric pressure.

When the atmospheric pressure was indicated, the fluorinating gas supply fluorine-line 2 was closed so that the reaction vessel 4 was hermetically closed, and the optical material was heated to the predetermined temperature shown in Table 1 below using a heater (not shown). After the temperature was reached, the material was held for the predetermined time period shown in Table 1 below (fluorination treatment process). The rate of temperature rise was set at 6.5 °C /minute.

The temperature in the reaction vessel 4 was then cooled to room temperature, and the valves of the exhaust line 6 and the inert gas supply line 1 were sequentially and quickly opened. After the fluorine gas in the reaction vessel 4 was replaced with nitrogen gas, the valves of the inert gas supply line 1 and the exhaust line 6 were closed, and the valve of the vacuum line 7 was opened so that the pressure in the reaction vessel 4 was reduced to 1 Pa or less.
Subsequently, the valve of the inert gas supply line 1 was opened, and when the indicated pressure in the reaction vessel 4 reached the atmospheric pressure, the valve of the exhaust line 6 was opened, and a heat treatment was performed at a nitrogen flow rate of 50 mL/minute and 400 °C for 2 hours. The rate of temperature rise was set at 6.5 °C /minute (post-treatment process). Subsequently, the temperature in the reaction vessel 4 was cooled to room temperature under a nitrogen stream, and the optical material was taken out. Thus, an optical member according to Example 1 was prepared.

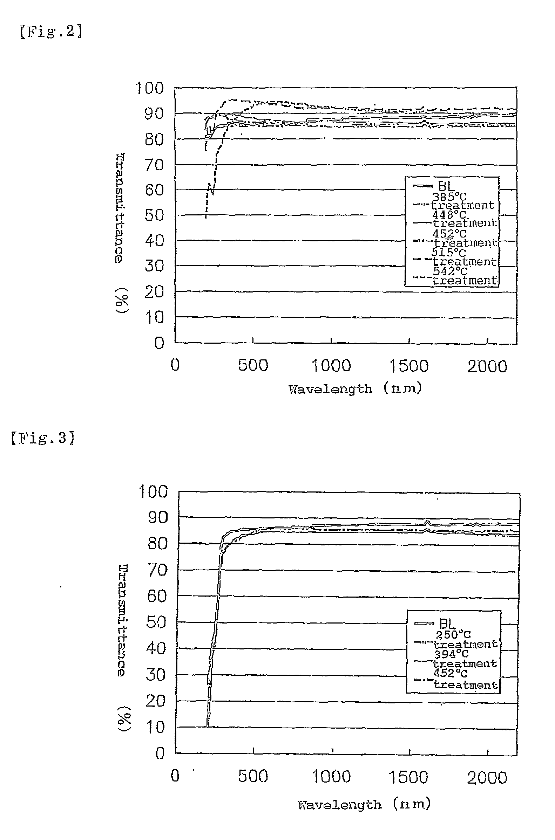

Before the treatment and after the fluorination treatment, the transmittance of the optical member was measured using an ultraviolet-visible-near infrared spectrophotometer manufactured by JASCO Corporation (trade name: V-670, integrating sphere unit ISN-723) as a measurement instrument. The results are shown in Table 1 below and Fig. 2. It should be noted that the peaks observed at about 350 nm and about 850 nm in Fig. 2 are derived from the spectrophotometer itself. In Fig. 2, "BL" represents the light transmittance before the fluorination treatment. The same applies to the cases shown in Figs. 3 to 15, which are described below.

**Table 1**

| Al2O3 | | Before fluorination treatment | Fluorination treatment | | | | |
|---|---|---|---|---|---|---|---|
| Treatment conditions | Temperature (°C) | - | 385 | 448 | 452 | 515 | 542 |
| | Time (hr) | - | 4 | 2 | 2 | 2 | 2 |
| Transmittance (%) | 190 nm | 79.6 | 80.8 | 84.0 | 87.5 | 75.9 | 49.5 |
| | 550 nm | 86.5 | 85.4 | 87.9 | 86.4 | 94.2 | 93.9 |
| | 1000 nm | 88.0 | 85.0 | 86.7 | 85.1 | 92.2 | 92.2 |
| | 2000 nm | 89.1 | 86.1 | 86.2 | 85.1 | 92.0 | 90.0 |

Table 1 and Fig. 2 show that the fluorination treatment at treatment temperatures of 385 °C to 452 °C increased the transmittance in the ultraviolet region (wavelength 190 nm). The fluorination treatment at treatment temperatures of 515 °C and 542 °C reduced the transmittance in the ultraviolet region (wavelength 190 nm) but increased the transmittance in the visible region (wavelength 550 nm) and the near infrared region (wavelength 1,000 nm).

### Example 2

An optical member according to this example was prepared as in Example 1, except that this example was performed using an optical material made of single crystal MgO (a product obtained by mirror-polishing a product manufactured by Sigma-Aldrich Corporation), using a treatment gas containing 10 % by volume of F₂ diluted with nitrogen in the fluorination treatment at a treatment temperature of 250 °C, and using conditions including the treatment temperature and the treatment time shown in Table 2 below. The transmittance of the resulting optical member was also measured as in Example 1. The results are shown in Table 2 below and Fig. 3.

**Table 2**

| MgO | | Before fluorination treatment | Fluorination treatment | | |
|---|---|---|---|---|---|
| Treatment conditions | Temperature (°C) | - | 250 | 394 | 452 |
| | Time(hr) | - | 2 | 2 | 2 |
| Transmittance (%) | 190 nm | 9.8 | 28.4 | 27.1 | 22.1 |
| | 550 nm | 86.1 | 85.9 | 84.6 | 85.4 |
| | 1000 nm | 87.5 | 85.5 | 84.8 | 85.5 |
| | 2000 nm | 88.1 | 84.3 | 84.4 | 85.4 |

Table 2 and Fig. 3 show that the fluorination treatment at treatment temperatures of 250 °C and 394 °C increased the transmittance in the ultraviolet region (wavelength 190 nm). The fluorination treatment at a treatment temperature of 452 °C reduced the transmittance in the ultraviolet region (wavelength 190 nm) but maintained a high level of transmittance in the visible region (wavelength 550 nm) and the near infrared region (wavelength 1,000 nm).

### Example 3

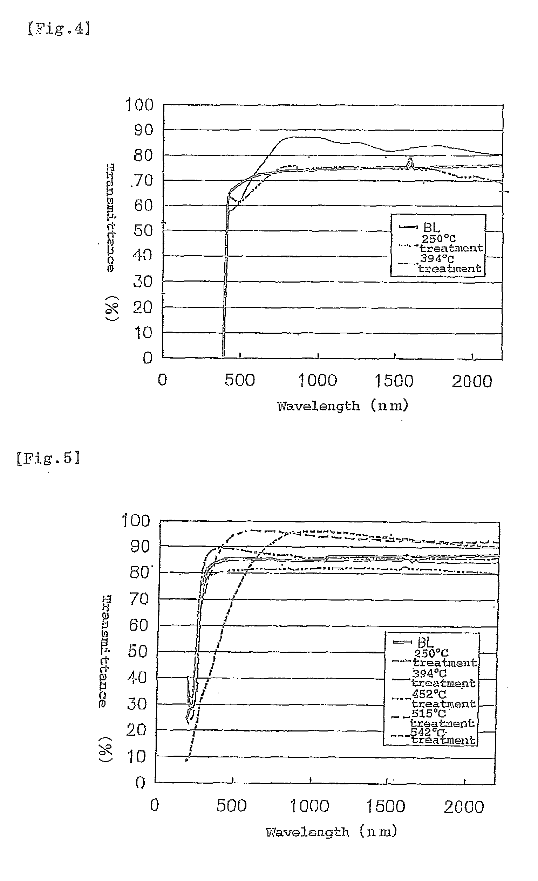

An optical member according to this example was prepared as in Example 1, except that this example was performed using an optical material made of single crystal SrTiO₃ (a product obtained by mirror-polishing a product manufactured by Sigma-Aldrich Corporation), using a treatment gas containing 10 % by volume of F₂ diluted with nitrogen in the fluorination treatment at a treatment temperature of 250 °C, and using conditions including the treatment temperature and the treatment time shown in Table 3 below. The transmittance of the resulting optical member was also measured as in Example 1. The results are shown in Table 3 below and Fig. 4.

**Table 3**

| SrTiO3 | | Before fluorination treatment | Fluorination treatment | |
|---|---|---|---|---|
| Treatment conditions | Temperature (°C) | - | 250 | 394 |
| | Time (hr) | - | 2 | 2 |
| Transmittance (%) | 190 nm | 0.7 | 0.0 | 0.0 |
| | 550 nm | 71.1 | 65.3 | 70.2 |
| | 1000 nm | 74.5 | 75.2 | 87.0 |
| | 2000 nm | 76.0 | 71.8 | 81.7 |

Table 3 and Fig. 4 show that after the fluorination treatment at treatment temperatures of 250 °C and 394 °C, no increase in the transmittance was observed in the ultraviolet region (wavelength 190 nm), but the fluorination treatment at a treatment temperature of 394 °C increased the transmittance in the near infrared region (wavelength 1,000 nm). However, the optical member was made cloudy. This is considered to be due to the generation of TiF₄ gas, because TiF₄ can sublime at a temperature of 284 °C.

### Example 4

An optical member according to this example was prepared as in Example 1, except that this example was performed using an optical material made of single crystal Y₃Al₅O₁₂ (YAG) (manufactured by Pier Optics Co., Ltd.), using a treatment gas containing 10 % by volume of F₂ diluted with nitrogen in the fluorination treatment at a treatment temperature of 250 °C, and using conditions including the treatment temperature and the treatment time shown in Table 4 below. The transmittance of the resulting optical member was also measured as in Example 1. The results are shown in Table 4 below and Fig. 5.

**Table 4**

| Y₃Al₅O₁₂ | | Before fluorination treatment | Fluoridation treatment | | | | |
|---|---|---|---|---|---|---|---|
| Treatment conditions | Temperature (°C) | - | 250 | 394 | 452 | 515 | 542 |
| | Time (hr) | - | 2 | 2 | 2 | 2 | 2 |
| Transmittance (%) | 190 nm | 26.1 | 37.0 | 41.4 | 41.3 | 24.5 | 8.4 |
| | 550 nm | 85.0 | 81.4 | 85.3 | 88.3 | 95.7 | 80.6 |
| | 1000 nm | 86.1 | 81.8 | 84.9 | 86.0 | 94.1 | 95.6 |
| | 2000 nm | 87,1 | 81.1 | 84.5 | 85.6 | 92.0 | 90.6 |

Table 4 and Fig. 5 show that the fluorination treatment at treatment temperatures of 250 °C to 452 °C increased the transmittance in the ultraviolet region (wavelength 190 nm). The fluorination treatment at treatment temperatures of 515 °C and 542 °C reduced the transmittance in the ultraviolet region (wavelength 190 nm) but increased the transmittance in the visible region (wavelength 550 nm) and the near infrared region (wavelength 1,000 nm).

### Example 5

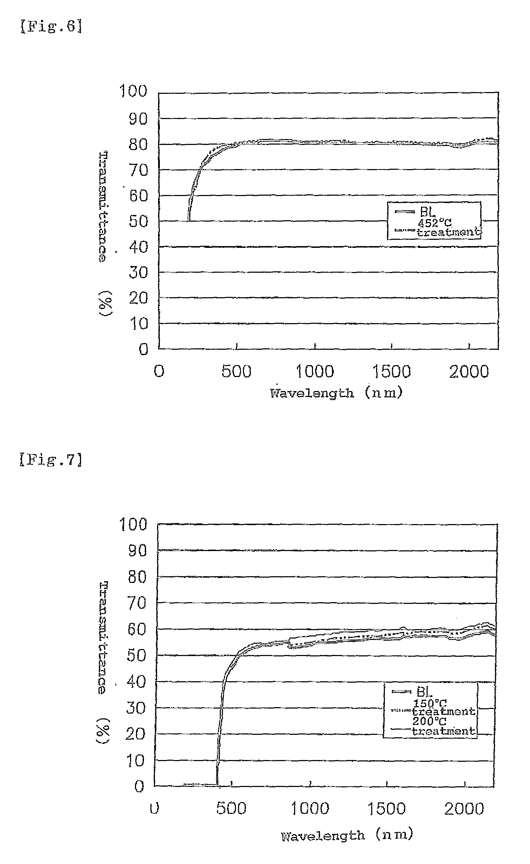

An optical member according to this example was prepared as in Example 1, except that this example was performed using an optical material made of single crystal MgO·Al₂O₃ (a product obtained by mirror-polishing a product manufactured by Sigma-Aldrich Corporation), using a treatment gas containing 10 % by volume of F₂ diluted with nitrogen in the fluorination treatment, and using conditions including the treatment temperature and the treatment time shown in Table 5 below. The transmittance of the resulting optical member was also measured as in Example 1. The results are shown in Table 5 below and Fig. 6.

**Table 5**

| MgO/Al₂O₃ | | Before fluorination treatment | Fluorination treatment |
|---|---|---|---|
| Treatment conditions | Temperature (°C) | - | 452 |
| | Time (hr) | - | 2 |
| Transmittance (%) | 190 nm | 52.0 | 57.4 |
| | 550 nm | 80.5 | 81.1 |
| | 1000 nm | 81.0 | 81.4 |
| | 2000 nm | 79.4 | 80.7 |

Table 5 and Fig. 6 show that after the fluorination treatment at a treatment temperature of 452 °C, an increase in the transmittance was observed in all of the ultraviolet region (wavelength 190 nm), the visible region (wavelength 550 nm) and the near infrared region (wavelength 1,000 nm).

### Example 6

An optical member according to this example was prepared as in Example 1, except that this example was performed using an optical material made of single crystal TiO₂ (a product obtained by mirror-polishing a product manufactured by Sigma-Aldrich Corporation), using a treatment gas containing 10 % by volume of F₂ diluted with nitrogen in the fluorination treatment at a treatment temperature of 150 °C, and using conditions including the treatment temperature and the treatment time shown in Table 6 below. The transmittance of the resulting optical member was also measured as in Example 1. The results are shown in Table 6 below and Fig. 7.

**Table 6**

| TiO₂ | | Before fluorination treatment | Fluorination treatment | |
|---|---|---|---|---|
| Treatment conditions | Temperature (°C) | - | 150 | 200 |
| | Time (hr) | - | 2 | 2 |
| Transmittance (%) | 190 nm | 0.0 | 0.0 | 0.0 |
| | 550 nm | 50.4 | 50.8 | 52.6 |
| | 1000 nm | 54.5 | 55.5 | 58.0 |
| | 2000 nm | 57.7 | 59.7 | 61.1 |

Table 6 and Fig. 7 show that after the fluorination treatment at treatment temperatures of 150 °C and 200 °C, no increase in the transmittance was observed in the ultraviolet region (wavelength 190 nm), but an increase in the transmittance was observed in all of the visible region (wavelength 550 nm) and the near infrared region (wavelength 1,000 nm).

### Example 7

An optical member according to this example was prepared as in Example 1, except that this example was performed using an optical material made of single crystal AlLaO₃ (a product obtained by mirror-polishing a product manufactured by Sigma-Aldrich Corporation), using a treatment gas containing 10 % by volume of F₂ diluted with nitrogen in the fluorination treatment at a treatment temperature of 250 °C, and using conditions including the treatment temperature and the treatment time shown in Table 7 below. The transmittance of the resulting optical member was also measured as in Example 1. The results are shown in Table 7 below and Fig, 8.

**Table 7**

| AlLaO₃ | | Before fluorination treatment | Fluorination treatment | |
|---|---|---|---|---|
| Treatment conditions | Temperature (°C) | - | 250 | 394 |
| | Time (hr) | - | 2 | 2 |
| Transmittance (%) | 190 nm | 0.9 | 1.0 | 1.5 |
| | 550 nm | 78.1 | 75.1 | 63.9 |
| | 1000 nm | 79.2 | 75.5 | 78.4 |
| | 2000 nm | 78.0 | 72.4 | 77.4 |

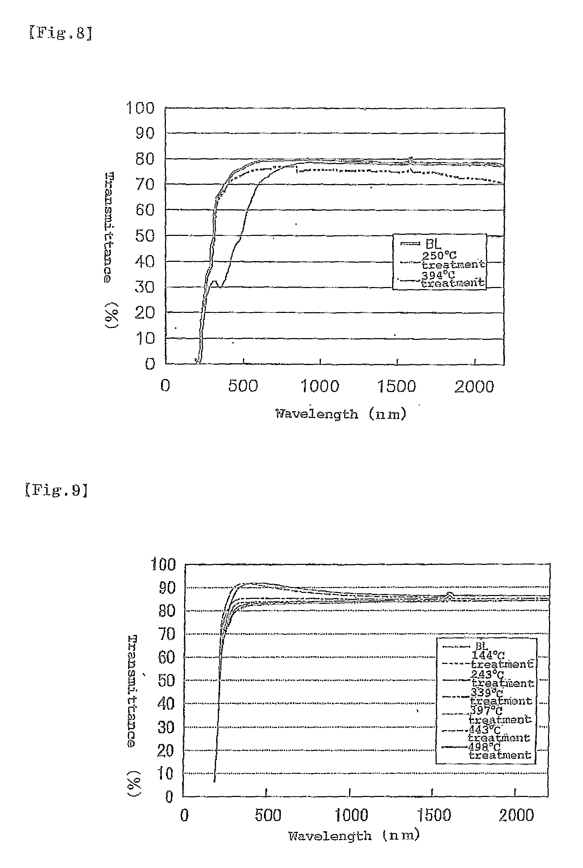

Table 7 and Fig. 8 show that the fluorination treatment at treatment temperatures 250 °C and 394 °C increased the transmittance in the ultraviolet region (wavelength 190 nm).

### Example 8

An optical member according to this example was prepared as in Example 1, except that this example was performed using an optical material made of polycrystalline Y₃Al₅O₁₂ (manufactured by KONOSHIMA Co., Ltd.), using a treatment gas containing 50 % by volume of F₂ diluted with nitrogen in the fluorination treatment, and using conditions including the treatment temperature and the treatment time shown in Table 8 below. The transmittance of the resulting optical member was also measured as in Example 1. The results are shown in Table 8 below and Fig. 9.

**Table 8**

| Y₃Al₅O₁₂ | | Before fluorination treatment | Fluorination treatment | | | | | |
|---|---|---|---|---|---|---|---|---|
| Treatment conditions | Temperature (°C) | - | 144 | 243 | 339 | 397 | 443 | 498 |
| | Time (hr) | - | 2 | 2 | 2 | 2 | 2 | 2 |
| Transmittance (%) | 190 nm | 6.6 | 6.5 | 6.5 | 6.8 | 7.1 | 7.2 | 6.4 |
| | 550 nm | 84.0 | 83.9 | 84.2 | 84.6 | 85.2 | 89.5 | 91.3 |
| | 1000 nm | 84.7 | 84.3 | 84.8 | 84.8 | 85.0 | 86.6 | 87.4 |
| | 2000 nm | 85.6 | 85.1 | 86.0 | 86.0 | 85.9 | 86.3 | 86.3 |

Table 8 and Fig. 9 show that the fluorination treatment at temperatures of 243 °C to 498 °C increased the transmittance in the region from visible to near infrared (wavelength 550 nm to 2,000 nm). At treatment temperatures of 339 °C to 443 °C, the transmittance in the ultraviolet region (wavelength 190 nm) was also successfully increased.

### Example 9

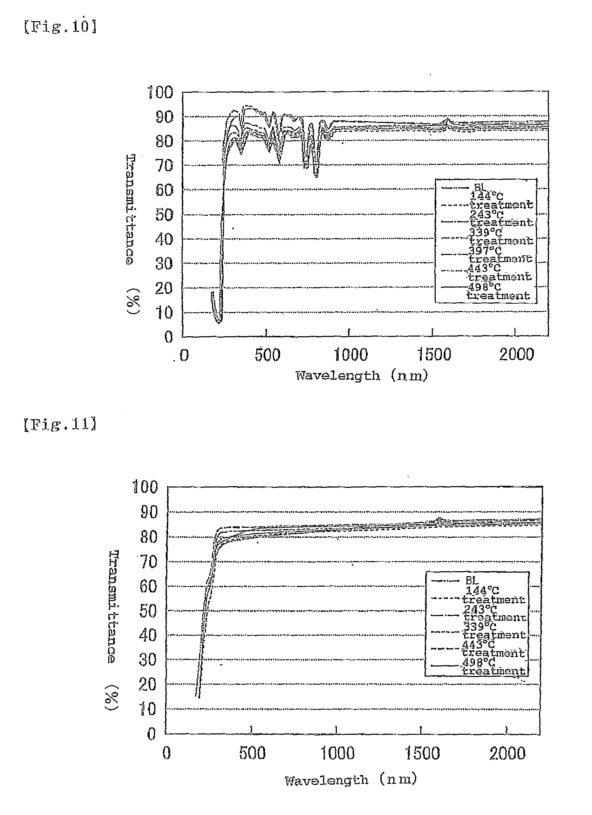

An optical member according to this example was prepared as in Example 1, except that this example was performed using an optical material made of polycrystalline 1 % Nd-YAG (manufactured by KONOSHIMA Co., Ltd.), using a treatment gas containing 50 % by volume of F₂ diluted with nitrogen in the fluorination treatment, and using conditions including the treatment temperature and the treatment time shown in Table 9 below. The transmittance of the resulting optical member was also measured as in Example 1. The results are shown in Table 9 below and Fig. 10.

**Table 9**

| 1 % NdYAG | | Before fluorination treatment | Fluorination treatment | | | | | |
|---|---|---|---|---|---|---|---|---|
| Treatment conditions | Temperature (°C) | - | 144 | 243 | 339 | 397 | 443 | 498 |
| | Time (hr) | - | 2 | 2 | 2 | 2 | 2 | 2 |
| Transmittance (%) | 190 nm | 14.8 | 15.0 | 15.2 | 15.6 | 16.9 | 17.3 | 16.2 |
| | 550 nm | 83.6 | 83.6 | 84.1 | 84.4 | 85.6 | 91.2 | 91.5 |
| | 1000 nm | 84.7 | 84.3 | 85.0 | 85.0 | 85.3 | 87.6 | 87.8 |
| | 2000 nm | 85.5 | 84.9 | 86.3 | 86.8 | 85.7 | 86.3 | 86.1 |

Table 9 and Fig. 10 show that the fluorination treatment at treatment temperatures of 144 °C to 498 °C increased the transmittance in the ultraviolet region (wavelength 190 nm). The fluorination treatment at treatment temperatures of 243 °C to 498 °C also increased the transmittance in the region from visible to near infrared (wavelength 550 nm to 2,000 nm).

### Example 10

An optical member according to this example was prepared as in Example 1, except that this example was performed using an optical material made of polycrystalline Al₂O₃ (manufactured by KONOSHIMA Co., Ltd.), using a treatment gas containing 30 % by volume of F₂ diluted with nitrogen in the fluorination treatment, and using conditions including the treatment temperature and the treatment time shown in Table 10 below. The transmittance of the resulting optical member was also measured as in Example 1. The results are shown in Table 10 below and Fig. 11,

**Table 10**

| Al₂O₃ | | Before fluorination treatment | Fluorination treatment | | | | | |
|---|---|---|---|---|---|---|---|---|
| Treatment conditions | Temperature (°C) | - | 144 | 243 | 339 | 397 | 443 | 498 |
| | Time (hr) | - | 2 | 2 | 2 | 2 | 2 | 2 |
| Transmittance (%) | 190 nm | 16.3 | 14.6 | 16.2 | 17.8 | 18.8 | 17.4 | 15.2 |
| | 550 nm | 80.8 | 81.4 | 81.9 | 82.8 | 83.8 | 84,1 | 83.6 |
| | 1000 nm | 83.1 | 83.0 | 83.6 | 83.7 | 84.0 | 84.1 | 84.2 |
| | 2000 nm | 86.3 | 85.4 | 86.2 | 85.9 | 86.0 | 86.4 | 85.8 |

Table 10 and Fig. 11 show that the fluorination treatment at temperatures of 339 °C to 443 °C increased the transmittance in the ultraviolet region (wavelength 190 nm). The fluorination treatment at treatment temperatures of 144 °C to 498 °C also increased the transmittance in the visible region (wavelength 550 nm). The fluorination treatment at treatment temperatures of 243 °C to 498 °C also increased the transmittance in the near infrared region (wavelength 1,000 nm), and at a treatment temperature of 443 °C, the transmittance was increased at a wavelength of 2,000 nm.

### Example 11

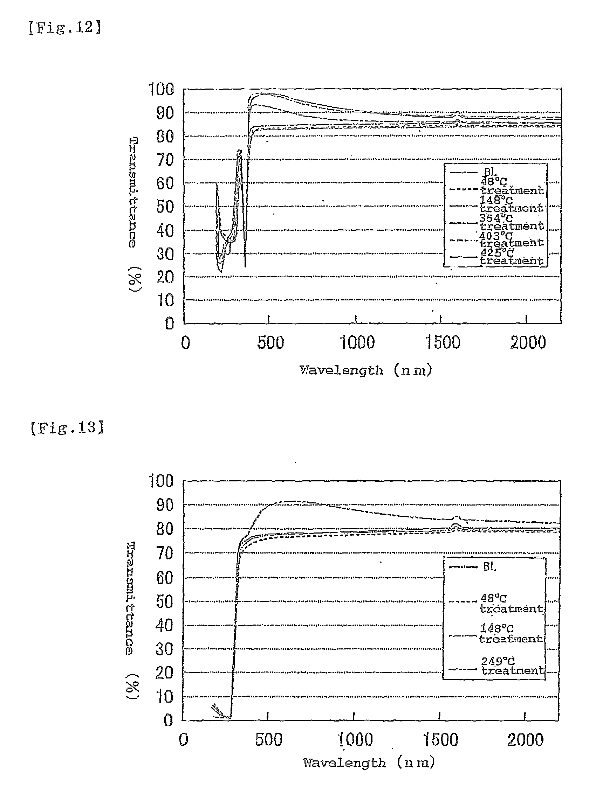

An optical member according to this example was prepared as in Example 1, except that this example was performed using an optical material made of single crystal Ce:LYSO (Ce-doped LuYSiO₅ available from Neotron Co., Ltd.) and using fluorination conditions including the treatment temperature and the treatment time shown in Table 11 below. The transmittance of the resulting optical member was also measured as in Example 1. The results are shown in Tables 11 and 12 below and Fig. 12.

**Table 11**

| Ce: LYSO | | Before fluorination treatment | Fluorination treatment | | | | |
|---|---|---|---|---|---|---|---|
| Treatment conditions | Temperature (°C) | - | 48 | 148 | 354 | 403 | 425 |
| | Time (hr) | - | 2 | 2 | 2 | 2 | 2 |
| Transmittance (%) | 190 nm | 58.8 | 58.9 | 53.2 | 52.8 | 50.8 | 52.2 |
| | 550 nm | 84.2 | 84.5 | 84.5 | 91.0 | 97.0 | 97.4 |
| | 1000 nm | 84.7 | 85.1 | 85.1 | 86.9 | 90.4 | 90.8 |
| | 2000 nm | 85.4 | 86.0 | 86.0 | 86.2 | 87.5 | 87.3 |

**Table 12**

| Ce: LYSO | | Before fluorination treatment | Fluorination treatment | | | | |
|---|---|---|---|---|---|---|---|
| Treatment conditions | Temperature (°C) | - | 48 | 148 | 354 | 403 | 425 |
| | Time (hr) | - | 2 | 2 | 2 | 2 | 2 |
| Emission wavelength | 420 nm | 83.6 | 84.0 | 83.9 | 92.9 | 97.5 | 96.6 |
| Excitation wavelength | 375 nm | 64.6 | 65.0 | 64.9 | 73.0 | 74.6 | 73.4 |

Tables 11 and 12 and Fig. 12 show that the fluorination treatment at temperatures of 48 °C to 425 °C increased the transmittance in the region from visible to near infrared (wavelength 550 nm to 2,000 nm). The fluorination treatment at a treatment temperature of 48 °C also increased the transmittance in the ultraviolet region (wavelength 190 nm).

### Example 12

An optical member according to this example was prepared as in Example 1, except that this example was performed using an optical material made of single crystal BGO (Bi₄Ge₃O₁₂ available from Neotron Co., Ltd.), using a treatment gas containing 20 % by volume of F₂ diluted with nitrogen in the fluorination treatment, and using conditions including the treatment temperature and the treatment time shown in Tables 13 and 14 below. The transmittance of the resulting optical member was also measured as in Example 1. The results are shown in Tables 13 and 14 below and Fig. 13.

**Table 13**

| BGO | | Before fluorination treatment | Fluorination treatment | | |
|---|---|---|---|---|---|
| Treatment conditions | Temperature (°C) | - | 48 | 148 | 249 |
| | Time (hr) | - | 2 | 2 | 2 |
| Transmittance (%) | 190 nm | 5.5 | 6.1 | 5.7 | 1.8 |
| | 550 nm | 77.0 | 77.2 | 78.5 | 91.3 |
| | 1000 nm | 78.6 | 78.6 | 79.1 | 88.1 |
| | 2000 nm | 80.4 | 79.7 | 79.8 | 82.7 |

**Table 14**

| BGO | | Before fluorination treatment | Fluorination treatment | | |
|---|---|---|---|---|---|
| Treatment conditions | Temperature (°C) | - | 48 | 48 | 249 |
| | Time (hr) | - | 2 | 2 | 2 |
| Emission wavelength | 480 nm | 76.3 | 76.4 | 78.0 | 89.0 |
| Excitation wavelength | 280 nm | 1.1 | 1.2 | 1.3 | 1.3 |

Tables 13 and 14 and Fig. 13 show that at treatment temperatures of 48 °C to 148 °C, the transmittance was increased in the ultraviolet and visible regions (wavelength 190 nm and visible 550 nm). When the treatment temperature was increased to 249 °C, the transmittance was increased in the region from visible to near infrared (wavelength 550 nm to 2,000 nm).

### Example 13

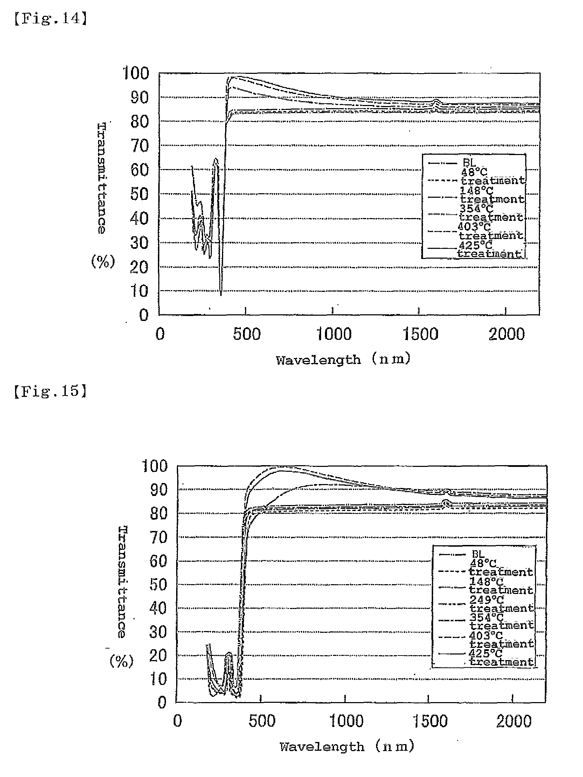

An optical member according to this example was prepared as in Example 1, except that this example was performed using an optical material made of single crystal Ce:LSO (Ce-doped Lu₂SiO₅ available from Neotron Co., Ltd.) and using fluorination conditions including the treatment temperature and the treatment time shown in Tables 15 and 16 below. The transmittance of the resulting optical member was also measured as in Example 1. The results are shown in Tables 15 and 16 below and Fig. 14.

**Table 15**

| Ce: LSO | | Before fluorination treatment | Fluorination treatment | | | | |
|---|---|---|---|---|---|---|---|
| Treatment conditions | Temperature (°C) | - | 48 | 148 | 354 | 403 | 425 |
| | Time (hr) | - | 2 | 2 | 2 | 2 | 2 |
| Transmittance (%) | 190 nm | 59.0 | 60.4 | 60.2 | 44.2 | 49.6 | 50.6 |
| | 550 nm | 84.4 | 84.5 | 84.6 | 91.5 | 96.1 | 97.3 |
| | 1000 nm | 84.9 | 85.1 | 85.1 | 87.3 | 89.7 | 90.4 |
| | 2000 nm | 85.6 | 86.1 | 86.0 | 86.3 | 87.5 | 87.4 |

**Table 16**

| Ce: LSO | | Before fluorination treatment | Fluorination treatment | | | | |
|---|---|---|---|---|---|---|---|
| Treatment conditions | Temperature (°C) | - | 48 | 148 | 354 | 403 | 425 |
| | Time (hr) | - | 2 | 2 | 2 | 2 | 2 |
| Emission wavelength | 420 nm | 83.8 | 84.0 | 84.0 | 93.6 | 97.8 | 97.6 |
| Excitation wavelength | 375 nm | 43.2 | 43.0 | 43.2 | 49.0 | 50.3 | 49.7 |

Tables 15 and 16 and Fig. 14 show that the fluorination treatment at temperatures of 48 °C to 425 °C increased the transmittance in the region from visible to near infrared (wavelength 550 nm to 2,000 nm). The fluorination treatment at treatment temperatures of 48 °C to 148 °C also increased the transmittance in the ultraviolet region (wavelength 190 nm).

### Example 14

An optical member according to this example was prepared as in Example 1, except that this example was performed using an optical material made of single crystal Ce:GSO (Ce-doped Gd₂SiO₅ available from Neotron Co., Ltd.), using a treatment gas containing 50 % by volume of F₂ diluted with nitrogen in the fluorination treatment, and using conditions including the treatment temperature and the treatment time shown in Tables 17 and 18 below. The transmittance of the resulting optical member was also measured as in Example 1. The results are shown in Tables 17 and 18 below and Fig. 15.

**Table 17**

| Ce: GSO | | Before fluorination treatment | Fluorination treatment | | | | | |
|---|---|---|---|---|---|---|---|---|
| Treatment conditions | Temperature (°C) | - | 48 | 148 | 249 | 354 | 403 | 425 |
| | Time (hr) | - | 2 | 2 | 2 | 2 | 2 | 2 |
| Transmittance (%) | 190 nm | 24.0 | 22.8 | 22.8 | 23.0 | 12.7 | 21.1 | 19.1 |
| | 550 nm | 82.9 | 82.3 | 82.5 | 82.7 | 84.6 | 98.8 | 97.4 |
| | 1000 nm | 83.3 | 83.0 | 83.1 | 83.3 | 92.4 | 93.9 | 93.6 |
| | 2000 nm | 84.0 | 84.0 | 84.0 | 83.9 | 87.6 | 87.0 | 86.9 |

**Table 18**

| Ce: GSO | | Before fluorination treatment | Fluorination treatment | | | | | |
|---|---|---|---|---|---|---|---|---|
| Treatment conditions | Temperature (°C) | - | 48 | 148 | 249 | 354 | 403 | 425 |
| | Time (hr) | - | 2 | 2 | 2 | 2 | 2 | 2 |
| Emission wavelength | 420 nm | 82.1 | 81.5 | 81.7 | 82.0 | 76.7 | 93.1 | 90.4 |
| Excitation wavelength | 310 nm | 4.1 | 3.9 | 4.0 | 4.0 | 5.5 | 4.4 | 4.1 |
| Excitation wavelength | 375 nm | 18.9 | 18.8 | 18.8 | 18.9 | 16.6 | 19.3 | 18.6 |

Tables 17 and 18 and Fig. 15 show that the fluorination treatment at temperatures of 48°C to 425°C increased the transmittance in the region from visible to near infrared (wavelength 550 nm to 2,000 nm). At treatment temperatures 48°C to 148°C, the transmittance was also increased in the ultraviolet region (wavelength 190 nm).

### DESCRIPTION OF THE REFERENCE CHARACTERS

In the drawings, reference numeral 1 represents an inert gas supply line, 2 a fluorinating gas supply line, 4 a reaction vessel, 5 an optical material, 6 an exhaust line, and 7 a vacuum line.

## Claims

1. An optical member, comprising:
- an optical material comprising a specific ceramic; and
- a fluoride film that is formed on at least a partial region of a surface of the optical material by bringing a treatment gas containing at least a fluorine atom into contact with the optical material under conditions depending on the specific ceramic, wherein the fluoride film is capable of increasing light transmittance in a specific wavelength region.

2. The optical member according to claim 1,
wherein the ceramic is an oxide ceramic comprising a metal oxide.

3. The optical member according to claim 1,
wherein the ceramic is a non-oxide ceramic comprising a metal nitride or a metal carbide.

4. The optical member according to claim 2,
wherein the oxide ceramic is at least one selected from the group consisting of MgO, Al₂O₃, TiO₂, BeO, ZrO₂, ZnO, Dy₂O₃, Ho₂O₃, Lu₂O₃, Sc₂O₃, Tm₂O₃, Yb₂O₃, Y₂O₃, SrTiO₃, AlLaO₃, Y₃Al₅O₁₂, MgO·Al₂O₃, YVO₄, BaTiO₃, Nd-doped Y₃AL₅O₁₂, Ce-doped LuYSiO₅, Bi₄Ge₃O₁₂, Ce-doped Lu₂SiO₅, and Ce-doped Gd₂SiO₅.

5. The optical member according to any one of claims 1 to 4,
wherein the optical material has been brought into contact with the treatment gas at a treatment temperature in the range of 160 °C to 700 °C for a treatment time period in the range of 1 minute to 5 hours.

6. A method for manufacturing an optical member, comprising:
providing an optical material comprising a specific ceramic; and
bringing a treatment gas containing at least a fluorine atom into contact with the optical material under conditions depending on the specific ceramic so that a fluoride film capable of increasing light transmittance in a specific wavelength region is formed on at least a partial region of a surface of the optical material.

7. The method according to claim 6,
wherein an oxide ceramic comprising a metal oxide is used as the ceramic.

8. The method according to claim 6,
wherein a non-oxide ceramic comprising a metal nitride or a metal carbide is used as the ceramic.

9. The method according to claim 7,
wherein the oxide ceramic used is at least one selected from the group consisting of MgO, Al₂O₃, TiO₂, BeO, ZrO₂, ZnO, Dy₂O₃, Ho₂O₃, Lu₂O₃, Sc₂O₃, Tm₂O₃, Yb₂O₃, Y₂O₃, SrTiO₃, AlLaO₃, Y₃Al₅O₁₂, MgO·Al₂O₃, YVO₄, BaTiO₃, Nd-doped Y₃Al₅O₁₂, Ce-doped LuYSiO₅, Bi₄Ge₃O₁₂, Ce-doped Lu₂SiO₅, and Ce-doped Gd₂SiO₅.

10. The method according to any one of claims 6 to 9,
wherein the optical material is brought into contact with the treatment gas at a treatment temperature in the range of 160 °C to 700 °C for a treatment time period in the range of 1 minute to 5 hours.
